# EUROPEAN PATENT APPLICATION

(11) **EP 4 753 223 A1**
(43) Date of publication of application: **03.06.2026**
(21) Application number: 25217927.0
(22) Date of filing: 24.11.2025
(51) Int. Cl.: H04L 41/0894, H04L 41/16, H04L 41/5051

(54) **IMPLEMENTING POLICIES IN A NETWORK**

(30) Priority: 27.11.2024 FI 20246391
(71) Applicant: Nokia Solutions and Networks Oy, 02610 Espoo (FI)
(72) Inventor: TANG, Haitao, Espoo (FI); SUBRAMANYA, Tejas, Munich (DE)
(74) Representative: Bryers Intellectual Property Ltd

(57) **Abstract**

Method comprising
storing
one or more service profiles for a service and,
for the service profiles, one or more function profiles for the respective service profile;

receiving a first inquiry comprising an indication of the service and an intent for the service;
selecting one of the service profiles based on the intent for the service;
replying, in response to the first inquiry, by a first reply comprising the selected one of the service profiles;
receiving a second inquiry comprising an indication of the selected service profile and a service plan;
selecting one of the function profiles for the selected service profile based on the service plan;
replying, in response to the second inquiry, by a second reply comprising the selected one of the function profiles for the selected service profile.

## Description

### Technical Field

The present disclosure relates to implementing policies in a network.

### Abbreviations

- 3GPP: 3^{rd} Generation Partnership Project
- 5G/6G: 5^{th}/6^{th} Generation
- 5G-A: 5G-Advanced
- Al: Artificial Intelligence
- APP: Application
- CAN: Cognitive Autonomous Networks
- ETL: Extraction, Transformation, and Load
- ID: Identifier
- ML: Machine Learning
- OAM: Operations, Administration and Maintenance
- QoS: Quality of Service
- QoT: Quality of Trustworthiness
- RAN: Radio Access Network
- RLA: Risk Level Agreement
- SLA: Service Level Agreement
- TAI: Trustworthy Artificial Intelligence
- TAIF: Trustworthy Artificial Intelligence Framework

### Background

In 5G-Advanced (5G-A) and 6G, it is anticipated that Artificial Intelligence (Al) / Machine Learning (ML) play a pivotal role in automating and optimizing intricate network and service operations across Radio Access Network (RAN), core, and management domains. This is helpful for meeting the demanding network requirements of complex emerging use cases such as industrial automation, extended reality, and digital sensing.

### Summary

It is an object to improve the prior art.

According to a first aspect, there is provided an apparatus comprising
means for storing
   one or more service profiles for a service and,
   for the one or more service profiles, one or more function profiles for the respective service profile;
first means for receiving a first inquiry, wherein the first inquiry comprises an indication of the service and an intent for the service;
first means for selecting one of the one or more service profiles based on the intent for the service;
first means for replying, in response to the first inquiry, by a first reply, wherein the first reply comprises the selected one of the one or more service profiles;
second means for receiving a second inquiry, wherein the second inquiry comprises an indication of the selected service profile and a service plan;
second means for selecting one of the one or more function profiles for the selected service profile based on the service plan;
second means for replying, in response to the second inquiry, by a second reply, wherein the second reply comprises the selected one of the one or more function profiles for the selected service profile.

The first reply may not comprise any function instance profile for the selected service profile. The second reply may not comprise any of the one or more service profiles for the service.

Each of the one or more service profiles may comprise a description of the service, respective one or more resources to implement the service, and, if the service profile comprises more than one resources to implement the service, respective one or more interactions between the resources to implement the service, wherein each of the resources may comprise at least one respective function and optionally an interface of the respective function.

Each of the one or more function profiles may comprise, for a respective function, function metadata and for one or more instances of the respective function, a respective function instance profile.

The apparatus may further comprise
third means for receiving a third inquiry, wherein the third inquiry comprises an indication of an instance of a first function ;
third means for selecting a stored function instance profile for the instance of the first function;
third means for replying, in response to the third inquiry, by a third reply, wherein the third reply comprises the function instance profile for the instance of the first function.

The third reply may not comprise any of the one or more service profiles for the service.

The third means for receiving may be configured to receive the third inquiry from an instance of a second function different from the first function;
according to the service plan, the second function may interwork with the first function; and at least one of
the second reply comprising the function profile for the second function may not comprise the function instance profile for the first function; or
the third reply may not comprise the function instance profile of the instance of the second function.

The first function may be included in the service plan.

According to a second aspect, there is provided an apparatus, comprising
first means for receiving a service plan including one or more functions;
means for inquiring, from a profile manager, one or more function profiles related to the functions included in the service plan;
second means for receiving, from the profile manager, the requested one or more function profiles in response to the inquiring the one or more function profiles;
means for determining, for the one or more functions included in the service plan, an instance of the respective function based on the one or more function profiles;
means for instructing the determined instances of the one or more functions to operate according to the service plan.

According to a third aspect, there is provided an apparatus, comprising
first means for receiving an instruction for an instance of a second function to interwork with an instance of a first function;
means for inquiring, from a profile manager, a function instance profile of the instance of the first function;
second means for receiving, from the profile manager, the function instance profile of the instance of the first function in response to the inquiring the function instance profile of the instance of the first function;
means for controlling the instance of the second function to interwork with the instance of the first function based on the function instance profile of the instance of the first function.

The controlling to interwork may comprise at least one of
selecting one or more interfaces between the instance of the first function and the instance of the second function for the interworking; or
determining an interaction manner for the interworking.

According to a fourth aspect, there is provided a method comprising
storing
   one or more service profiles for a service and,
   for the one or more service profiles, one or more function profiles for the respective service profile;
receiving a first inquiry, wherein the first inquiry comprises an indication of the service and an intent for the service;
selecting one of the one or more service profiles based on the intent for the service;
replying, in response to the first inquiry, by a first reply, wherein the first reply comprises the selected one of the one or more service profiles;
receiving a second inquiry, wherein the second inquiry comprises an indication of the selected service profile and a service plan;
selecting one of the one or more function profiles for the selected service profile based on the service plan;
replying, in response to the second inquiry, by a second reply, wherein the second reply comprises the selected one of the one or more function profiles for the selected service profile.

The first reply may not comprise any function instance profile for the selected service profile. The second reply may not comprise any of the one or more service profiles for the service.

Each of the one or more service profiles may comprise a description of the service, respective one or more resources to implement the service, and, if the service profile comprises more than one resources to implement the service, respective one or more interactions between the resources to implement the service, wherein each of the resources may comprise at least one respective function and optionally an interface of the respective function.

Each of the one or more function profiles may comprise, for a respective function, function metadata and for one or more instances of the respective function, a respective function instance profile.

The method may further comprise
receiving a third inquiry, wherein the third inquiry comprises an indication of an instance of a first function ;
selecting a stored function instance profile for the instance of the first function;
replying, in response to the third inquiry, by a third reply, wherein the third reply comprises the function instance profile for the instance of the first function.

The third reply may not comprise any of the one or more service profiles for the service.

The third inquiry may be received from an instance of a second function different from the first function;
according to the service plan, the second function may interwork with the first function; and at least one of
the second reply comprising the function profile for the second function may not comprise the function instance profile for the first function; or
the third reply may not comprise the function instance profile of the instance of the second function.

The first function may be included in the service plan.

According to a fifth aspect, there is provided a method, comprising
receiving a service plan including one or more functions;
inquiring, from a profile manager, one or more function profiles related to the functions included in the service plan;
receiving, from the profile manager, the requested one or more function profiles in response to the inquiring the one or more function profiles;
determining, for the one or more functions included in the service plan, an instance of the respective function based on the one or more function profiles;
instructing the determined instances of the one or more functions to operate according to the service plan.

According to a sixth aspect, there is provided a method, comprising
receiving an instruction for an instance of a second function to interwork with an instance of a first function;
inquiring, from a profile manager, a function instance profile of the instance of the first function;
receiving, from the profile manager, the function instance profile of the instance of the first function in response to the inquiring the function instance profile of the instance of the first function;
controlling the instance of the second function to interwork with the instance of the first function based on the function instance profile of the instance of the first function.

The controlling to interwork may comprise at least one of
selecting one or more interfaces between the instance of the first function and the instance of the second function for the interworking; or
determining an interaction manner for the interworking.

The method of the fourth aspect may be a method of implementing a policy in a network.

The method of the fifth aspect may be a method of implementing a policy in a network.

The method of the sixth aspect may be a method of implementing a policy in a network.

According to a seventh aspect, there is provided a computer program product comprising a set of instructions which, when executed on an apparatus, is configured to cause the apparatus to carry out the method according to any of the fourth to sixth aspects. The computer program product may be embodied as a computer-readable medium or directly loadable into a computer.

According to some example embodiments, at least one of the following advantages may be achieved:
- unnecessary signaling of unneeded profiles is avoided;
- each level may implement the service according to its respective needs and the corresponding profiles;
- increased flexibility in service implementation.

### Brief description of the drawings

Further details, features, objects, and advantages are apparent from the following detailed description of the preferred example embodiments which is to be taken in conjunction with the appended drawings, wherein:
Fig. 1 shows a TAI framework for CAN;
Fig. 2 shows workflow in the TAI framework;
Fig. 3 shows a system comprising components and interfaces according to some example embodiments;
Fig. 4 shows a workflow according to some example embodiments;
Fig. 5 shows an apparatus according to an example embodiment;
Fig. 6 shows a method according to an example embodiment;
Fig. 7 shows an apparatus according to an example embodiment;
Fig. 8 shows a method according to an example embodiment;
Fig. 9 shows an apparatus according to an example embodiment;
Fig. 10 shows a method according to an example embodiment; and
Fig. 11 shows an apparatus according to an example embodiment.

### Detailed description of certain example embodiments

Herein below, certain example embodiments are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the disclosure to the disclosed details.

Moreover, it is to be understood that the apparatus is configured to perform the corresponding method, although in some cases only the apparatus or only the method are described.

However, AI/ML's inherent challenges, including data quality, lack of model transparency, accountability issues, privacy, safety, security, and ethical concerns can lead to trust issues. This is especially relevant considering the anticipated deployment/embedding of hundreds of AI/ML models in 5G-A/6G operational networks (including network functions and/or management functions). Therefore, it is of paramount importance for communication stakeholders - network vendors, operators, and regulators - to address these AI/ML trustworthiness issues for wider adoption of AI/ML-driven network and service automation.

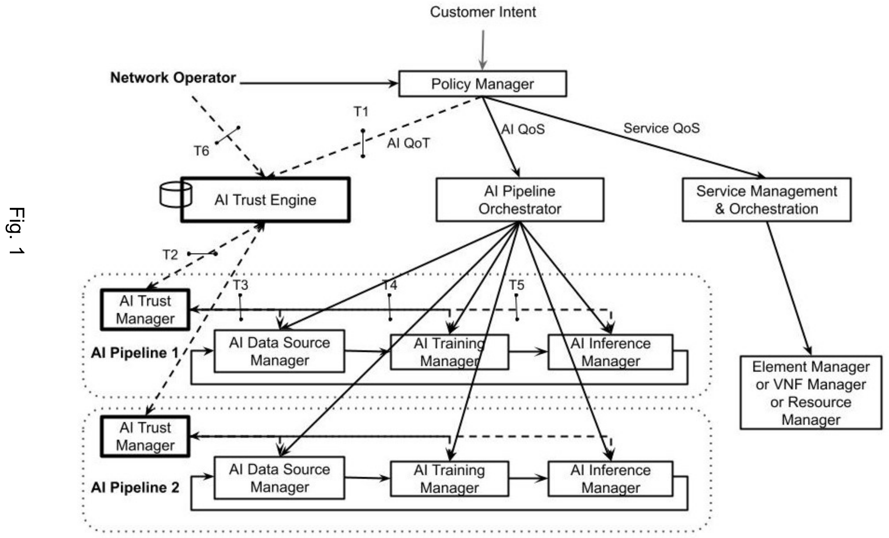

In US 2024/0195701 A1, Nokia introduced a Trustworthy Artificial Intelligence Framework (TAIF) for Cognitive Autonomous Networks (CAN) to facilitate the definition, configuration, monitoring and measuring of Al/ML model trustworthiness (e.g., fairness, explainability, robustness) for interoperable and multi-vendor environments, as shown in Fig. 1. A service definition or the business/customer intent may include Al/ML trustworthiness requirements in addition to the Network/Al Quality of Service (QoS) requirements, and the TAIF is used to configure the requested AI/ML trustworthiness and to monitor and assure its fulfilment. The TAIF introduced two management functions, the Al Trust Engine (one per management domain) and the Al Trust Manager (one per AI/ML Pipeline) and six new interfaces (T1-T6) that support the interactions in the TAIF. The Al Trust Engine is centre for managing all Al trustworthiness related things in the network, whereas the Al Trust Managers are use case and often vendor specific, with knowledge of the Al use case and how it is implemented.

Nokia also introduced the concept of Al Quality of Trustworthiness (Al QoT) (as seen over the T1 interface in Fig. 1) to define AI/ML model trustworthiness in a unified way covering three factors, i.e., fairness, explainability, and robustness, similar to how QoS is used for network performance.

As in US 2024/0195701 A1, in the present context, the terms fairness, explainability, and robustness mean the following:
1. **Fairness:** Fairness is the process of understanding bias introduced in the data, and ensuring the model provides equitable predictions across all demographic groups. It is important to apply fairness analysis throughout the entire Al/ML Pipeline, making sure to continuously reevaluate the models from the perspective of fairness and inclusion. This is especially important when Al/ML is deployed in critical business processes that affect a wide range of end users. There are three broad approaches to detect bias in the Al/ML model:
   a. ***Pre-processing fairness** -* To detect bias in the Al/ML training data using algorithms such as Reweighing and Disparate impact remover.
   b. ***In-processing fairness** -* To detect bias in the AI/ML model generation using algorithms such as Prejudice Remover and Adversarial debiasing.
   c. ***Post-processing fairness** -* To detect bias in the Al/ML model decisions using algorithms such as Odds-equalizing and Reject option classification.

**Quantification of Fairness** - There are several metrics that measure individual and group fairness. For example, Statistical Parity Difference, Average Odds Difference, Disparate Impact and Theil Index.
2. **Explainability:** Explainability of an AI/ML model refers to unveiling of the black box model which just makes the prediction or gives the recommendation to the White box which actually gives the details of the underlying mechanism and pattern identified by the model for a particular dataset. There are multiple reasons why it is necessary to understand the underlying mechanism of an Al/ML model such as human readability, justifiability, interpretability and bias mitigation. There are three broad approaches to design an ML model to be explainable:
a. ***Pre-modelling explainability** -* To understand or describe data used to develop AI/ML models. For example, using algorithms such as ProtoDash and Disentangled Inferred Prior VAE.
b. ***Explainable modelling*/*****Interpretable modelling** -* To develop more explainable AI/ML models, e.g., ML models with joint prediction and explanation or surrogate explainable models. For example, using algorithms such as Generalized Linear Rule Models and Teaching Explainable Decisions (TED).
c. ***Post-modelling explainability** -* To extract explanations from pre-developed AI/ML models. For example, using algorithms such as ProtoDash, Contrastive Explanations Method, Profweight, LIME and SHAP.

Furthermore, explanations can be local (i.e., explaining a single instance/prediction) or global (i.e., explaining the global AI/ML model structure/predictions, e.g., based on combining many local explanations of each prediction).

**Quantification of Explainability** - Although it is ultimately the consumer who determines the quality of an explanation, the research community has proposed quantitative metrics as proxies for explainability. There are several metrics that measure explainability such as Faithfulness and Monotonicity.
3. **Robustness (adversarial):** There are four adversarial threats that any Al/ML model developers/scientists need to consider defending and evaluating their Al/ML models and applications.
a. ***Evasion:*** Evasion attacks involves carefully perturbing the input samples at test time to have them misclassified. For example, using techniques such as Shadow attack and Threshold attack.
b. ***Poisoning:*** Poisoning is adversarial contamination of training data. Machine learning systems can be re-trained using data collected during operations. An attacker may poison this data by injecting malicious samples during operation that subsequently disrupt retraining. For example, using techniques such as Backdoor attack and Adversarial backdoor embedding.
c. ***Extraction:*** Extraction attacks aim at duplicating a machine learning model through query access to a target model. For example, using techniques such as KnockoffNets and Functionally equivalent extraction.
d. ***Inference:*** Inference attacks determine if a sample of data was used in the training dataset of an AI/ML model. For example, using techniques such as Membership inference black-box and attribute inference black-box.

There are a number of approaches to defend Al/ML models against such adversarial attacks at each stage of the Al/ML design:
a. ***Preprocessor -*** For example, using techniques such as InverseGAN and DefenseGAN.
b. ***Postprocessor** -* For example, using techniques such as Reverse sigmoid and Rounding.
c. ***Trainer** -* For example, using techniques such as General adversarial training and Madry's protocol.
d. ***Transformer** -* For example, using techniques such as Defensive distillation and Neural cleanse.
e. ***Detector** -* For example, using techniques such as Detection based on activations analysis and Detection based on spectral signatures.

**Quantification of Robustness:** There are several metrics that measure robustness of ML models such as Empirical Robustness and Loss Sensitivity.

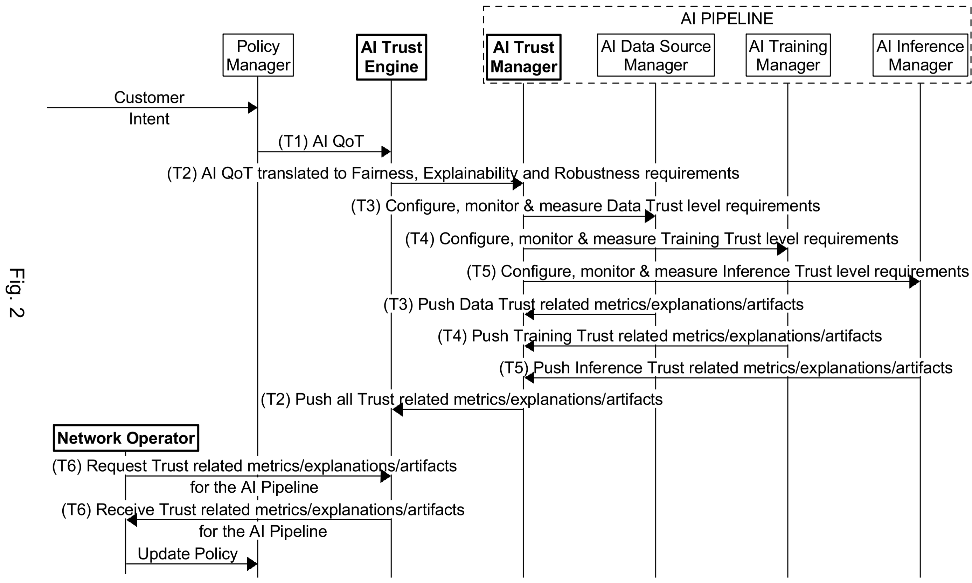

A high-level generic workflow within the TAIF is shown in Fig. 2. The network operator can specify, over the T1 interface, the required Al QoT (use case-specific based on risk levels) to the Al Trust Engine via the Policy Manager. The Al Trust Engine translates the Al QoT into specific Al trustworthiness (i.e., fairness, explainability and robustness) requirements and identifies the affected use-case-specific Al Trust Manager(s). Using the T2 interface, The Al Trust Engine configures the Al Trust Managers. The use case specific and implementation-aware AI Trust Manager configures, monitors, and measures Al trustworthy requirements for Al Data Source Manager, Al Training Manager and Al Inference Manager over T3, T4 and T5 interfaces, respectively. The measured or collected TAI metrics and/or TAI explanations from the Al Data Source Manager, Al Training Manager and Al Inference Manager regarding the Al Pipeline are pushed to the Al Trust Manager over T3, T4 and T5 interfaces, respectively. The Al Trust Manager pushes the TAI metrics and/or TAI explanations to the Al Trust Engine, over the T2 interface, based on the reporting mechanisms configured by the Al Trust Engine. Finally, the network operator can request and receive the TAI metrics/explanations of an Al Pipeline from the Al Trust Engine over the T6 interface. Based on the information retrieved, the Network Operator may decide to update the policy via Policy Manager.

There are substantially two ways how AI/ML functionalities are implemented in communication networks:
(i) standalone AI/ML functions hosted outside the traditional network and/or management functions, and
(ii) AIML capabilities may be embedded (native) inside their own network and management entities (i.e., functions) that realize the network and its management.

In particular for the second way, the Al/ML pipelines (data ETL, training, and inference) are usually handled inside their own functions and by their functions, not directly by an OAM function. Even if a model of one function can be trained or stored by another function, it is still the first function to realize and protect the trustworthiness of the model instance, e.g., through model obfuscation when training and through model encryption when storing. OAM has its role in the realization and protection of the function centric AIML trustworthiness. However, it is not described how OAM functions would help to realize and protect the function centric AIML trustworthiness. This problem is even more severe for the native AIML based 6G network and management.

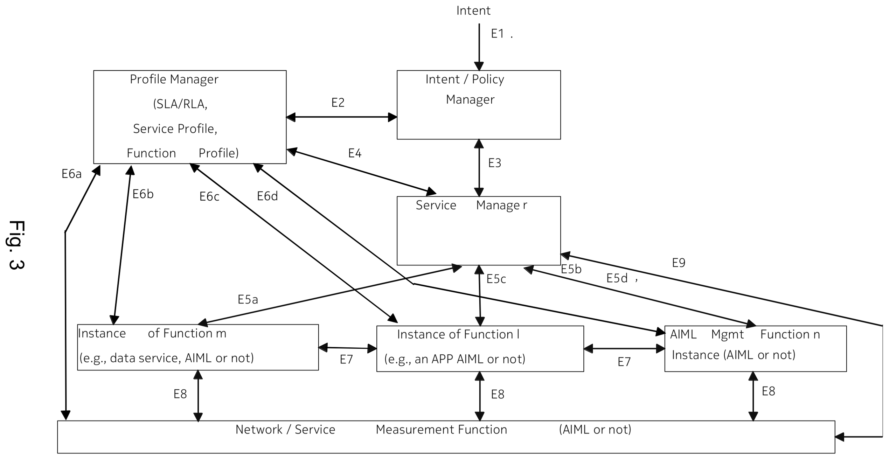

Some example embodiments provide an apparatus (Profile Manager) and the method which provides the corresponding service plans and the related customer service requirement for OAM functions to create and operate an AIML-embedded (or AIML-native) function to produce a corresponding service, as shown in Fig. 3. A customer providing the intent (E1) can be a human user or a function defined by the SLA/RLA or function profile. In addition, a service manager and a function instance interworking with the profile manager and the respective methods are provided.

The entities of Fig. 3 may be described as follows:
**Profile Manager** is the service producer to collect and provide (1) the data of the Service Level Agreement (SLA) / Risk level Agreement (RLA) for a service (a "service profile") to one or a group of customers and (2) the data of the function profile of a function that provides the service (a part of the whole).

**Service Profile** is the description of what is a customer service and the resources needed to implement the customer service, where the resources may comprise such as functions and interfaces, and their quantitative requirements. The service profile may describe multiple options of resources (e.g., functions and interfaces) and inter-function interactions to implement the service. Depending on the operational context, Intent/Policy Manager decides or selects the best option to implement the service.

**Intent / Policy Manager** is the service producer that maps, based on the service profile, the intent of a service consumer into an executable plan ("service plan") for the Service Manager to realize. The intent consumer can be a human customer for a service or a function for a service of another function, including the service of training the AIML function as a whole or keeping/serving its possibly encrypted model(s) after the training.
- **Service Plan** is an executable script that configures, organizes, and actuates specific function instances for them to work together and provide the customer required service properly, including the function instances to monitor and manage the other function instances and the service performance (by the Network / Service Measurement Function, see below). Depending on the needs, a service plane can be further separated into, and thus comprise, different sub-plans, such as one or more of function control plan, reliability plan, explainability plan, traceability plan, fairness plan, etc.
   1. **Function Control Plan** defines whether the configuration, input, or output of a function can be overwritten, and if yes, under what condition.
   2. **Reliability Plan** defines the action(s) (if any) corresponding to the performances and status of the customer service and a specific function instance for this service.
   3. **Explainability Plan** defines the explanation manner(s) and conditions that the explanation should be provided by the corresponding function instance(s) to the customer service and for the output of such a function instance.
   4. **Traceability Plan** defines the information entities of the function instances and customer service that are traced, including such as their logging manner and access manner (URI to access the log, log ID, security, etc.)
   5. **Fairness Plan** defines the specific manner of data sampling and preprocessing before they are used as the input of a function instance of the customer service as well as the manner to reshape the output of a function instance.
   The above list of potential sub-plans of the service plan is not exhaustive.

**Service Manager** is the service producer that checks the profile of a function in the executable plan ("service plan") from Intent / Policy Manager and then creates / uses / associates the corresponding function instance(s) to provide service required by the intent. Service Manager may also monitor the measurements of the network and the service and, operate the service accordingly.

**Function Profile** may comprise **Function Metadata** and/or **Function Instance Profile** as defined below. Function metadata and Function instance Profile may have different time and network scope granularities. For example, a function metadata can be more static for a network wide access, while a function instance profile can be more dynamic for the access in a smaller scope (e.g., a core, RAN, or only the customer service-related base stations).
- **Function Metadata** provides the name of the function, the description of what the function can do, its input parameters and input manners, its output parameters and manners, its service manners or options, and its management manners (e.g., configuration, performance, security, storage, access, removal, etc.). The function metadata collects the general information of the function and guides the creation its function instance.
- **Function Instance Profile** provides the function name, instance ID, input manner, output manner, service manner, management manner, status, and operational context. The function instance profile collects the information of the instance and guides the specific service and management of the instance.

**Instance of a Function** is the instance of the function providing a service, the instance of the function assisting the service (e.g., providing the data), or the instance of the function managing another service, etc. They are created or, if already existing, used to achieve the service required by the intent.

**Network / Service Measurement Function** is the service producer to measure and report the performance of the network and service accordingly, including the measured or estimated trustworthiness of the service. From the point of view of trustworthiness, the network / service measurement function may be considered as another instance of a function, similar to the other function instances.

The logical procedure (actions) on the interfaces E1 to E9 shown in Fig. 1 according to some example embodiments are as follows:
**E1.** Operator / human customer / a function / service consumer provides the intent for a service. For example, an intent can be "Provide the highest priority for NB-loT (Narrow Band Internet of Things) services at network area XYZ".
**E2.** Intent manager checks, at the profile manager, the corresponding SLA/RLA of the customer for the service. The profile manager provides the service profile of the service and the SLA/RLA for the customer to the intent manager. If, according to the SLA/RLA, the service is allowed for the customer, Intent manager checks resources availability for such a customer service according to the service profile and corresponding function metadata from the profile manager. For example, Intent manager would decide which of the available CCO (Coverage and Capacity Optimization) function, MRO (Mobility Robustness Optimization) function, LBO (Load Balancing Optimization) would be used to fix a specific capacity problem, and TS (Traffic Steering). The request for SLA/RLA and the check thereof is optional.
**E3.** Intent manager creates a corresponding service plan for the customer service and sends the executable service plan to service manager
**E4.** Based on the provided service plan, service manager checks the function instance profiles (of all the involved functions) from the profile manager, where multiple function instances of same involved function can be existing. The service manager further enhances the service plan by selecting the most suitable function instances, interfaces, configurations, based on the information of the function instances and the more detailed information of the network scope where the customer service is to be provided. For example, if TS function is given in the service plan from intent manager, the service manager decides which of the TS function instances or what configuration should be selected for the TS function instance to do the work. The service plan is then further enhanced by the selected function instances.
**E5.** Service Manager instantiates and activates or, simply, use already created function instances according to the enhanced service plan. In Fig. 3, this action comprises the parallel sub-actions E5a, E5b, E5c, and E5d to associate the function instances together for the service and service measurement.
**E6** (optional). A function instance for the customer service further checks its function profile and the profile(s) of other interacting function instance(s) for the customer service. The function instance selects the most suitable runtime interfaces and interaction manners to work with the other function instances for the customer services. In Fig. 3, this action comprises one or more parallel sub-actions E6a, E6b, E6c, and E6d. For example, when the TS function given in the service plan is to do traffic steering between two specific RATs (Radio Access Technologies), the TS function instance further selects the corresponding signaling interfaces and procedures for the customer service.
**E7** (optional). For the customer service, a function instance may request the service or serve the request of another function instance in the selected interface and interaction manner.
**E8** (optional). The service results and individual performances of the function instances are collected by a function instance called Network / Service Measurement Function, which may calculate an overall service result and/or overall performance for the service and/or the network based on the individual service results and performances.
**E9** (optional). The overall service result and/or overall performance may be sent back to Service Manager. The overall service result and/or overall performance may trigger the service manager to re-enhance the service plan using E4 interface and a new execution of the action on E5 interface.

In response to the request from the intent manager on E2 for the service profile, the profile manager typically does not provide a function instance profile to the intent manager. Correspondingly, in response to the request from the service manager on E4 for the function profile, the profile manager typically does not provide a service profile to the service manager. I.e., the inquiries on E2 and E4 to the profile manager are related to different profiles. However, both the reply from the profile manager to the intent manager on E2 and the reply from the profile manager to the service manager on E4 may comprise respective function metadata.

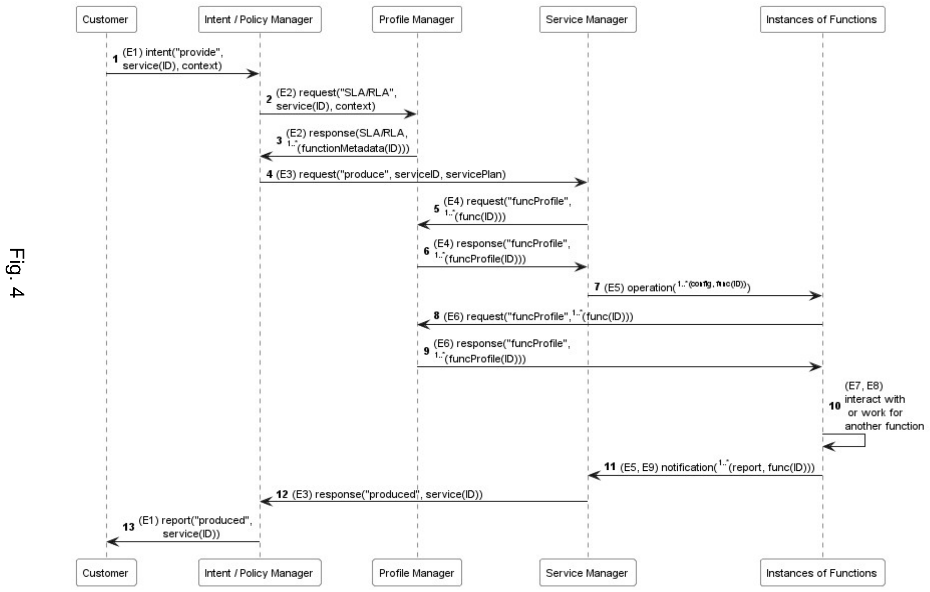

Fig. 4 shows a workflow to realize the logical procedure described above for the interfaces E1 to E9.
1. A Customer (a function instance or a human user) sends the intent to provide service of service ID to APP of APP ID in the context.
2. Intent Manager requests Profile Manager to get a service profile for the service and SLA/RLA for the Customer and the APP of APP ID including its context.
3. Profile Manager responds Intent Manager the SLA/RLA, the service profiles including the candidate functions (of function IDs) and other resources (e.g., interfaces), as well as the function metadata of the candidate functions for producing the service to the APP.
4. Intent Manager defines a service plan based on SLA/RLA, the service profile, and the function metadata. Then, Intent Manager requests Service Manager to deploy the service to the APP by providing the Service Manager the defined service plan.
5. According to the service plan, Service Manager requests from Profile Manager the function profiles (function metadata and function instance profile) of the functions given in the service plan.
6. Profile Manager responds the function profiles of the functions to Service Manager.
7. Service Manager defines the corresponding deployment plan based on the function profiles and executes this plan for the service to the APP.
8. (optional) Function Instances correspondingly created / used for the service request from Profile Manager to get the function profiles or function instance profiles of the one or more interworking functions for use during providing the service.
9. (optional) Profile Manager responds with the corresponding function profiles or function instance profiles.
10. (optional) Function Instances interact with each other to provide the service according to the function profiles or function instance profiles.
11. (optional) Function Instances notify Service Manager about the start or status of the service.
12. (optional) Service Manager forwards the start or status of the service to Intent Manager.
13. (optional) Intent Manager reports Customer the start or status of the service.

Typically the vendor of a function may agree with the operator concerning at least some sub-plans of the service plan. The joint of these sub-plans may be called a "trustworthy plan". Such a trustworthy plan may comprise a descriptive script that is executable and verifiable by / for the operator. The trustworthy plan may comprise one or more of the following sub-plans, e.g., Function Control Plan, Security Plan, Reliability Plan, Explainability Plan, Traceability Plan, Fairness Plan, etc. Typically, the function vendor and the operator together define one or more of these sub-plans jointly. In addition to their executability, the sub-plans of the trustworthy plan should typically also be verifiable by the vendor and/or the operator, preferably individually by the vendor and individually by the operator. For example, a traceability plan can define (1) the specific information entities to be traced, the logging manner (e.g., when and how to log the data from tracing information entities, etc.), and the access manner (e.g., URI of the logged data, security for the access, etc.). The log can thus be collected and verified according to what has been specified. In this way, the traceability of the function is realized.

The functions may be functions of RAN, Core, and/or OAM.

The profile manager may be implemented as a single unit (HW and/or SW unit) or may be implemented by several components. For example, it may comprise one component for the service profiles and one component for the function profiles and function instance profiles, or it may comprise one component for the service profiles, one component for the function profiles, and one component for the function instance profiles.

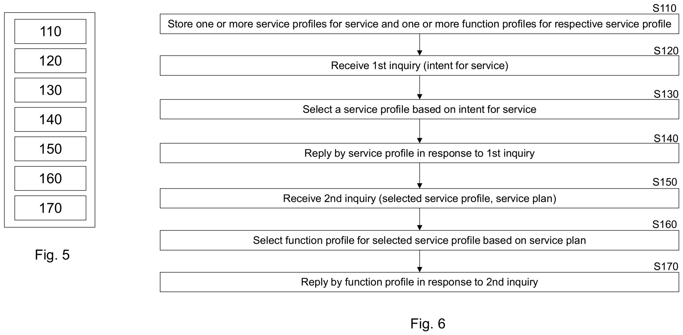

Fig. 5 shows an apparatus according to an example embodiment. The apparatus may be a profile manager or an element thereof. Fig. 6 shows a method according to an example embodiment. The apparatus according to Fig. 5 may perform the method of Fig. 6 but is not limited to this method. The method of Fig. 6 may be performed by the apparatus of Fig. 5 but is not limited to being performed by this apparatus.

The apparatus comprises means for storing 110, first means for receiving 120, first means for selecting 130, first means for replying 140, second means for receiving 150, second means for selecting 160, and second means for replying 170. The means for storing 110, first means for receiving 120, first means for selecting 130, first means for replying 140, second means for receiving 150, second means for selecting 160, and second means for replying 170 may be a storing means, first receiving means, first selecting means, first replying means, second receiving means, second selecting means, and second replying means, respectively. The means for storing 110, first means for receiving 120, first means for selecting 130, and first means for replying 140, second means for receiving 150, second means for selecting 160, and second means for replying 170 may be a storing device, first receiver, first selector, first replier, second receiver, second selector, and second replier, respectively. The means for storing 110, first means for receiving 120, first means for selecting 130, first means for replying 140, second means for receiving 150, second means for selecting 160, and second means for replying 170 may be a storing processor, first receiving processor, first selecting processor, first replying processor, second receiving processor, second selecting processor, and second replying processor, respectively.

The means for storing 110 stores one or more service profiles for a service and, for the one or more service profiles, one or more function profiles for the respective service profile (S110). More specifically, the means for storing 110 may store, for each of the one or more service profiles, respective one or more function profiles.

The first means for receiving 120 receives a first inquiry (S120). The first inquiry comprises an indication of the service and an intent for the service. Based on the intent for the service received in S120, the first means for selecting 130 selects one of the one or more service profiles (S130). The first means for replying 140 replies, in response to the first inquiry of S120, by a first reply (S140). The first reply comprises the one of the one or more service profiles selected in S130.

The second means for receiving 150 receives a second inquiry (S150). The second inquiry comprises an indication of the service profile selected in S130 and a service plan. Based on the service plan received in S150, the second means for selecting 160 selects one of the one or more function profiles for the selected service profile (S160). The second means for replying 170 replies, in response to the second inquiry of S150, by a second reply (S170). The second reply comprises the one of the one or more function profiles for the selected service profile selected in S160.

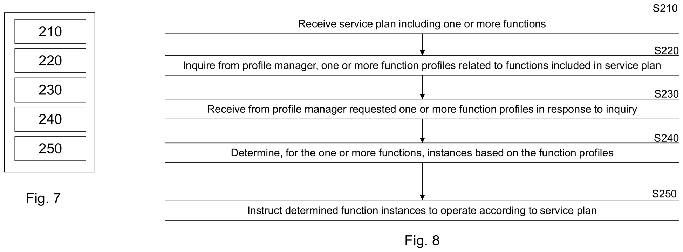

Fig. 7 shows an apparatus according to an example embodiment. The apparatus may be a service manager or an element thereof. Fig. 8 shows a method according to an example embodiment. The apparatus according to Fig. 7 may perform the method of Fig. 8 but is not limited to this method. The method of Fig. 8 may be performed by the apparatus of Fig. 7 but is not limited to being performed by this apparatus.

The apparatus comprises first means for receiving 210, means for inquiring 220, second means for receiving 230, means for determining 240, and means for instructing 250. The first means for receiving 210, means for inquiring 220, second means for receiving 230, means for determining 240, and means for instructing 250 may be a first receiving means, inquiring means, second receiving means, determining means, and instructing means, respectively. The first means for receiving 210, means for inquiring 220, second means for receiving 230, means for determining 240, and means for instructing 250 may be a first receiver, inquirer, second receiver, determiner, and instructor, respectively. The first means for receiving 210, means for inquiring 220, second means for receiving 230, means for determining 240, and means for instructing 250 may be a first receiving processor, inquiring processor, second receiving processor, determining processor, and instructing processor, respectively.

The first means for receiving 210 receives a service plan (S210). The service plan includes one or more functions. The means for inquiring 220 inquires, from a profile manager, one or more function profiles (S220). The requested function profiles are related to the functions included in the service plan. The second means for receiving 230 receives, from the profile manager in response to the inquiring the one or more function profiles of S220, the requested one or more function profiles (S230).

Based on the one or more function profiles, the means for determining 240 determines, for the one or more functions included in the service plan, an instance of the respective function (S240). More specifically, based on the one or more function profiles, the means for determining 240 may determine, for each of the one or more functions included in the service plan, an instance of the respective function. The means for instructing 250 instructs the instances of the one or more functions determined in S240 to operate according to the service plan (S250).

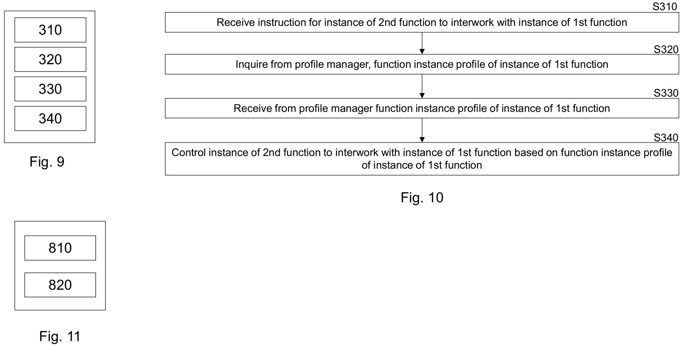

Fig. 9 shows an apparatus according to an example embodiment. The apparatus may be an instance of a function or an element thereof. Fig. 10 shows a method according to an example embodiment. The apparatus according to Fig. 9 may perform the method of Fig. 10 but is not limited to this method. The method of Fig. 10 may be performed by the apparatus of Fig. 9 but is not limited to being performed by this apparatus.

The apparatus comprises first means for receiving 310, means for inquiring 320, second means for receiving 330, and means for controlling 340. The first means for receiving 310, means for inquiring 320, second means for receiving 330, and means for controlling 340 may be a first receiving means, inquiring means, second receiving means, and controlling means, respectively. The first means for receiving 310, means for inquiring 320, second means for receiving 330, and means for controlling 340 may be a first receiver, inquirer, second receiver, and controller, respectively. The first means for receiving 310, means for inquiring 320, second means for receiving 330, and means for controlling 340 may be a first receiving processor, inquiring processor, second receiving processor, and controlling processor, respectively.

The first means for receiving 310 receives an instruction for an instance of a second function (S310). The instruction instructs the instance of the second function to interwork with an instance of a first function. The means for inquiring 320 inquires from a profile manager, a function instance profile of the instance of the first function (S320). The second means for receiving 330 receives, from the profile manager in response to the inquiring the function instance profile of the instance of the first function of S320, the function instance profile of the instance of the first function (S330). The means for controlling 340 controls the instance of the second function to interwork with the instance of the first function based on the function instance profile of the instance of the first function received in S330 (S340).

Fig. 11 shows an apparatus according to an example embodiment. The apparatus comprises at least one processor 810, at least one memory 820 storing instructions that, when executed by the at least one processor 810, cause the apparatus at least to perform the method according to at least one of Fig. 6 or Fig. 8 or Fig. 10 and related description.

Some example embodiments may be implemented for networks (such as communication networks or power networks). They may be implemented not only for arbitrary networks, such as 3GPP communication networks of any generation or non-3GPP communication networks but also in other contexts where trustworthiness of a service is relevant.

One piece of information may be transmitted in one or plural messages from one entity to another entity. Each of these messages may comprise further (different) pieces of information.

Names of network elements, network functions, protocols, and methods are based on current standards, or are current proposals. These names are not limiting. For example, in other versions or other technologies, the names of corresponding entities may be different or the same as in the present description.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments provide, for example, a policy manager or an element thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, a service manager or an element thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, an instance of a function or an element thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments. However, it should be noted that the description of the preferred example embodiments is given by way of example only and that various modifications may be made without departing from the scope of the disclosure as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. The term "or" refers to a non-exclusive "or" unless otherwise indicated (e.g., use of "or else" or "or in the alternative").

## Claims

1. Apparatus comprising
means for storing
one or more service profiles for a service and,
for the one or more service profiles, one or more function profiles for the respective service profile;
first means for receiving a first inquiry, wherein the first inquiry comprises an indication of the service and an intent for the service;
first means for selecting one of the one or more service profiles based on the intent for the service;
first means for replying, in response to the first inquiry, by a first reply, wherein the first reply comprises the selected one of the one or more service profiles;
second means for receiving a second inquiry, wherein the second inquiry comprises an indication of the selected service profile and a service plan;
second means for selecting one of the one or more function profiles for the selected service profile based on the service plan;
second means for replying, in response to the second inquiry, by a second reply, wherein the second reply comprises the selected one of the one or more function profiles for the selected service profile.

2. The apparatus according to claim 1, wherein at least one of
the first reply does not comprise any function instance profile for the selected service profile; or
the second reply does not comprise any of the one or more service profiles for the service.

3. The apparatus according to any of claims 1 to 2, wherein at least one of
each of the one or more service profiles comprises a description of the service, respective one or more resources to implement the service, and, if the service profile comprises more than one resources to implement the service, respective one or more interactions between the resources to implement the service, wherein each of the resources comprises at least one respective function and optionally an interface of the respective function; or
each of the one or more function profiles comprises, for a respective function, function metadata and for one or more instances of the respective function, a respective function instance profile.

4. The apparatus according to any of claims 1 to 3, further comprising
third means for receiving a third inquiry, wherein the third inquiry comprises an indication of an instance of a first function ;
third means for selecting a stored function instance profile for the instance of the first function;
third means for replying, in response to the third inquiry, by a third reply, wherein the third reply comprises the function instance profile for the instance of the first function.

5. The apparatus according to claim 4, wherein
the third reply does not comprise any of the one or more service profiles for the service.

6. The apparatus according to any of claims 4 and 5, wherein
the third means for receiving is configured to receive the third inquiry from an instance of a second function different from the first function;
according to the service plan, the second function interworks with the first function; and at least one of
the second reply comprising the function profile for the second function does not comprise the function instance profile for the first function; or
the third reply does not comprise the function instance profile of the instance of the second function.

7. The apparatus according to any of claims 4 to 6, wherein the first function is included in the service plan.

8. Apparatus, comprising
first means for receiving a service plan including one or more functions;
means for inquiring, from a profile manager, one or more function profiles related to the functions included in the service plan;
second means for receiving, from the profile manager, the requested one or more function profiles in response to the inquiring the one or more function profiles;
means for determining, for the one or more functions included in the service plan, an instance of the respective function based on the one or more function profiles;
means for instructing the determined instances of the one or more functions to operate according to the service plan.

9. Apparatus, comprising
first means for receiving an instruction for an instance of a second function to interwork with an instance of a first function;
means for inquiring, from a profile manager, a function instance profile of the instance of the first function;
second means for receiving, from the profile manager, the function instance profile of the instance of the first function in response to the inquiring the function instance profile of the instance of the first function;
means for controlling the instance of the second function to interwork with the instance of the first function based on the function instance profile of the instance of the first function.

10. The apparatus according to claim 9, wherein the controlling to interwork comprises at least one of
selecting one or more interfaces between the instance of the first function and the instance of the second function for the interworking; or
determining an interaction manner for the interworking.

11. Method comprising
storing
one or more service profiles for a service and,
for the one or more service profiles, one or more function profiles for the respective service profile;
receiving a first inquiry, wherein the first inquiry comprises an indication of the service and an intent for the service;
selecting one of the one or more service profiles based on the intent for the service;
replying, in response to the first inquiry, by a first reply, wherein the first reply comprises the selected one of the one or more service profiles;
receiving a second inquiry, wherein the second inquiry comprises an indication of the selected service profile and a service plan;
selecting one of the one or more function profiles for the selected service profile based on the service plan;
replying, in response to the second inquiry, by a second reply, wherein the second reply comprises the selected one of the one or more function profiles for the selected service profile.

12. Method, comprising
receiving a service plan including one or more functions;
inquiring, from a profile manager, one or more function profiles related to the functions included in the service plan;
receiving, from the profile manager, the requested one or more function profiles in response to the inquiring the one or more function profiles;
determining, for the one or more functions included in the service plan, an instance of the respective function based on the one or more function profiles;
instructing the determined instances of the one or more functions to operate according to the service plan.

13. Method, comprising
receiving an instruction for an instance of a second function to interwork with an instance of a first function;
inquiring, from a profile manager, a function instance profile of the instance of the first function;
receiving, from the profile manager, the function instance profile of the instance of the first function in response to the inquiring the function instance profile of the instance of the first function;
controlling the instance of the second function to interwork with the instance of the first function based on the function instance profile of the instance of the first function.

14. A computer program product comprising a set of instructions which, when executed on an apparatus, is configured to cause the apparatus to carry out the method according to any of claims 11 to 13.
